**Europäisches Patentamt**

**European Patent Office**

**Office européen des brevets**

(19)

(11) Veröffentlichungsnummer: **0 015 225**
**B1**

(12) # EUROPÄISCHE PATENTSCHRIFT

(45) Veröffentlichungstag der Patentschrift:
22.12.82

(51) Int. Cl.³: **H 02 B 5/04**

(21) Anmeldenummer: 80730006.6

(22) Anmeldetag: 04.02.80

(54) Freileitungsanschluss an einer Schaltstation mit einer dreipolig gekapselten, druckgasisolierten Hochspannungsschaltanlage.

(30) Priorität: 05.02.79 JP 13618/79

(43) Veröffentlichungstag der Anmeldung:
03.09.80 Patentblatt 80/18

(45) Bekanntmachung des Hinweises auf die Patenterteilung:
22.12.82 Patentblatt 82/51

(84) Benannte Vertragsstaaten:
AT CH DE FR GB NL SE

(56) Entgegenhaltungen:
DE-A-2 706 057

(73) Patentinhaber: FUJI ELECTRIC CO. LTD., 1-1,
Tanabeshinden, Kawasaki-ku, Kawasaki 210 (JP)

(72) Erfinder: Kishida, Yoshio, Dipl.-Ing., 1272-62 Küden-cho,
Totsuka-ku, Yokohama-shi (JP)

(74) Vertreter: Mehl, Ernst, Dipl.-Ing. et al, Postfach 22 01 76,
D-8000 München 22 (DE)

Freileitungsanschluss an einer Schaltstation mit einer dreipolig gekapselten, druckgasisolierten Hochspannunngsschaltanlage

Die Erfindung betrifft einen Freileitungsanschluss zu einer Schaltstation mit einer dreipolig gekapselten, druckgasisolierten Hochspannungsschaltanlage, bei welcher die Freileitungsseile zunächst über Isolatoren an einer Tragkonstruktion verankert und dann zu den Durchführungen an dem dreipolig gekapselten, druckgasisolierten Schaltfeld geführt sind (DE-A 27 06 057).

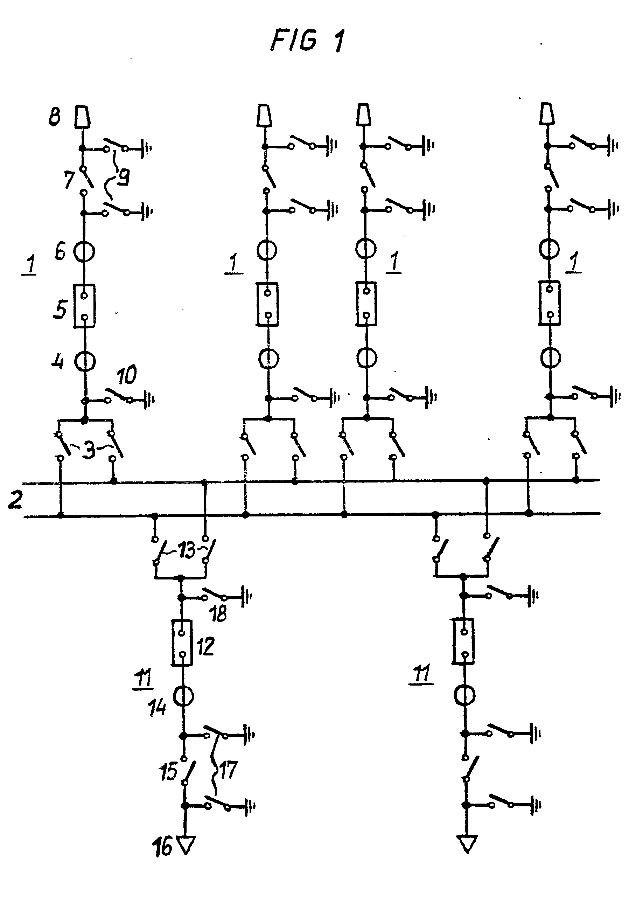

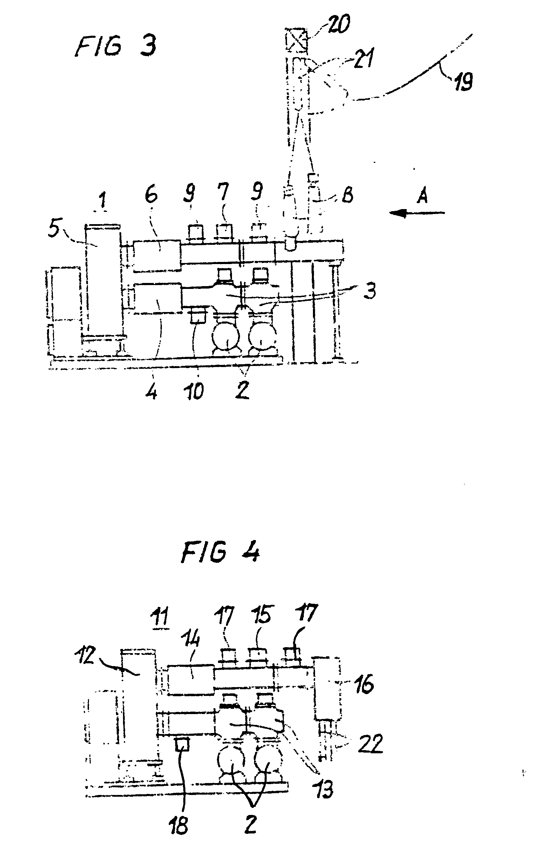

Eine derartig aufgebaute Schaltstation in bekannter Ausführung ist in den Fig. 1 bis 5 als Stand der Technik dargestellt.

Bei den bekannten dreipolig gekapselten, druckgasisolierten Hochspannungsschaltanlagen ergibt sich hinsichtlich des Anschlusses der Freileitungsseile, die jeweils horizontal nebeneinanderliegend an einer rahmenförmigen Tragkonstruktion verankert sind, die Schwierigkeit, dass die vorgegebenen Abstände zwischen den Phasen in Luft, die eingehalten werden müssen, wesentlich grösser sind, als die Phasenabstände innerhalb der Druckgasisolierung. Die Durchführungen an dem dreipolig gekapselten, druckgasisolierten Schaltfeld des Freileitungsanschlusses sind deshalb auseinandergespreizt, schräg zueinanderliegend angeordnet. Ausserdem sind besondere Distanzstücke, bestehend aus der druckgasgefüllten Kapselung mit Sammelschienen, erforderlich, die im Verlauf der Sammelschienen eingesetzt werden, um den Abstand zwischen den einzelnen Schaltfeldern den Anschlüssen entsprechend aufzuweiten. Dies vergrössert den Aufwand für die gekapselte Hochspannungsschaltanlage in unerwünschter Weise, auch wenn durch eine geschickte Anordnung der anderen Schaltfelder, z. B. der mit Kabelanschlüssen, ein Teil des Platzes unterhalb der Durchführungen der Freileitungsanschlüsse anderweitig ausgenutzt werden kann.

Durch die Erfindung soll der Raumbedarf für die dreipolig gekapselte Schaltanlage durch eine besondere konstruktive Gestaltung des Freileitungsanschlusses verringert werden.

Zur Lösung dieser Aufgabe sind bei einem Freileitungsanschluss der eingangs beschriebenen Art gemäss der Erfindung die Anschlusspunkte der Freileitungsseile für ein Schaltfeld an der Tragkonstruktion verankernden Isolatoren in einer im Bereich der Feldteilung des Schaltfeldes vorzugsweise auf der Mittelachse liegenden, insbesondere vertikalen Ebene in der Tiefe und Höhe gestaffelt angeordnet und die Durchführungen des Schaltfeldes in dieser Ebene hintereinander angeordnet.

Die Aufspreizung der Freileitungsseile ist also in den Bereich ausserhalb der gekapselten Hochspannungsschaltanlage verlegt, d. h. ins Freie, wo der Raum in der Höhe im allgemeinen nicht beschränkt ist. Dies bedingt zwar eine höhere Tragkonstruktion zur Aufnahme der Isolatoren für die Verankerung der Freileitungsseile, was aber gegenüber der Kostenersparnis bei der dreipolig gekapselten, druckgasisolierten Hochspannungsschaltanlage und bei dem Gehäuse der Schaltstation, falls vorhanden, vernachlässigbar ist.

Im folgenden sei die Erfindung anhand des in den Fig. 6 bis 8 dargestellten Ausführungsbeispiels im Vergleich zu den den Stand der Technik zeigenden Fig. 1 bis 5 noch näher erläutert.

Fig. 1 zeigt das Prinzipschaltbild einer bekannten Schaltstation.

In Fig. 2 ist eine Aufsicht auf die Schaltstation nach Fig. 1 dargestellt, die als dreipolig gekapselte, druckgasisolierte Hochspannungsschaltanlage bekannter Bauart ausgeführt ist.

Fig. 3 zeigt einen Teilschnitt entlang der Linie III-III in Fig. 2, desgleichen

Fig. 4 einen Teilschnitt entlang der Linie IV-IV in Fig. 2 und schliesslich ist in

Fig. 5 eine Seitenansicht in Richtung des Pfeiles A in Fig. 3 dargestellt.

Fig. 6 zeigt eine Aufsicht auf eine Schaltstation entsprechend dem Prinzipschaltbild nach Fig. 1, die gemäss der Erfindung ausgebildet ist.

Fig. 7 zeigt einen Teilschnitt entlang der Linie VII-VII in Fig. 6 und in

Fig. 8 ist eine Seitenansicht in Richtung des Pfeiles B in Fig. 7 dargestellt.

Für gleiche Gegenstände sind sowohl beim Stand der Technik als auch beim Ausführungsbeispiel gemäss der Erfindung gleiche Bezugszeichen verwendet.

Das Prinzipschaltbild der Schaltstation nach Fig. 1 zeigt jeweils vier dreipolig gekapselte, druckgasisolierte Schaltfelder 1, welche die Einspeisung der elektrischen Leitung von einer dreiphasigen Freileitung auf eine Doppelsammelschiene 2 ermöglicht. In jedem Schaltfeld 1 ist die Doppelsammelschiene 2 über zwei Sammelschienentrenner 3 und einem Stromwandler 4 mit dem Leistungsschalter 5 verbunden. Hinter diesem liegt ein weiterer Stromwandler 6 und ein Trenner 7, der zu der Durchführung 8 des nicht dargestellten Freileitungsanschlusses führt. Ausserdem sind benachbart zu dem Trenner 7 zwei Erder 9 und benachbart zum Sammelschienentrenner 3 ein Erder 10 vorgesehen. Die Schaltstation weist ausserdem zwei Kabelabzweige 11 auf, deren Leistungsschalter 12 über Sammelschienentrenner 13 mit der Doppelsammelschiene 2 und über den Stromwandler 14 und den Trenner 15 über den Kabelanschluss 16 mit dem nicht dargestellten Kabel verbunden ist. Benachbart zum Trenner 15 sind zwei Erder 17, benachbart zu den Sammelschienentrennern 13 ein Erder 18 vorgesehen.

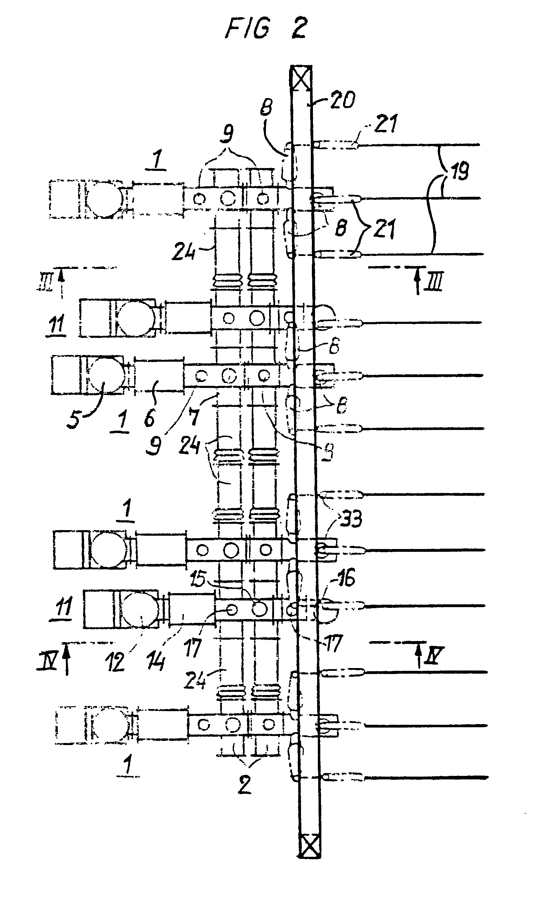

Bei der bekannten Schaltstation sind die Freileitungsanschlüsse der Schaltfelder 1 jeweils so ausgebildet, dass die Freileitungsseile 19 einer dreiphasigen Freileitung von einem nicht dargestellten Tragmast kommend zunächst horizontal nebeneinanderliegend an einer rahmenförmigen Tragkonstruktion 20 über Isolatoren 21 verankert sind. Sie sind dann mit den drei Durchführungen 8 jedes Schaltfeldes 1 verbunden, die zur Einhaltung der erforderlichen Abstände gegeneinander sowohl horizontal als auch winklig versetzt sind (siehe Fig. 2, 3 und 5). Die von den Freileitungen kommende elektrische Leistung wird über die Schaltfelder 1 auf die Doppelsammelschiene 2 eingespeist, von wo sie dann über die Kabelabzweige 11 zu den Kabeln 22 geführt wird.

Bei dieser bekannten Ausführung einer Schaltstation ist der Raumbedarf sowohl durch die isolierende Lufttrennstrecke zwischen den Freileitungsseilen als auch durch die Abmessungen der dreipolig gekapselten, druckgasisolierten Schaltfelder bestimmt. Da die Feldteilung, d. h. die Breite der dreipolig gekapselten Schaltfelder 1 geringer als der Absand zwischen den drei zugehörigen Anschlusspunkten 23 der die Freileitungsseile 19 an der Tragkonstruktion 20 verankernden Isolatoren 21 ist, müssen im Zug der Doppelsammelschiene 2 besondere Distanzstüche 24 eingebaut sein, die jeweils nur aus der druckasgefüllten Kapselung mit den Sammelschienen bestehen, um die durch den Freileitungsanschluss erforderlichen Abstände zwischen den Schaltfeldern 1 zu überbrücken. Man hat zwar die Kabelabzweige 11 jeweils so benachbart zu einem Schaltfeld 1 angeordnet, dass der Platz unter den Durchführungen 8 für den Freiluftanschluss für einen Kabelanschluss 16 ausgenutzt werden kann, jedoch macht dies nicht den Einsatz von Distanzstücken 24 überflüssig. Diese Distanzstücke 24 erhöhen wesentlich die Kosten für die gekapselte Schaltanlage, da nicht nur ein grösserer Raumbedarf entsteht, sondern auch ein grösserer Bedarf am isolierenden Druckgas.

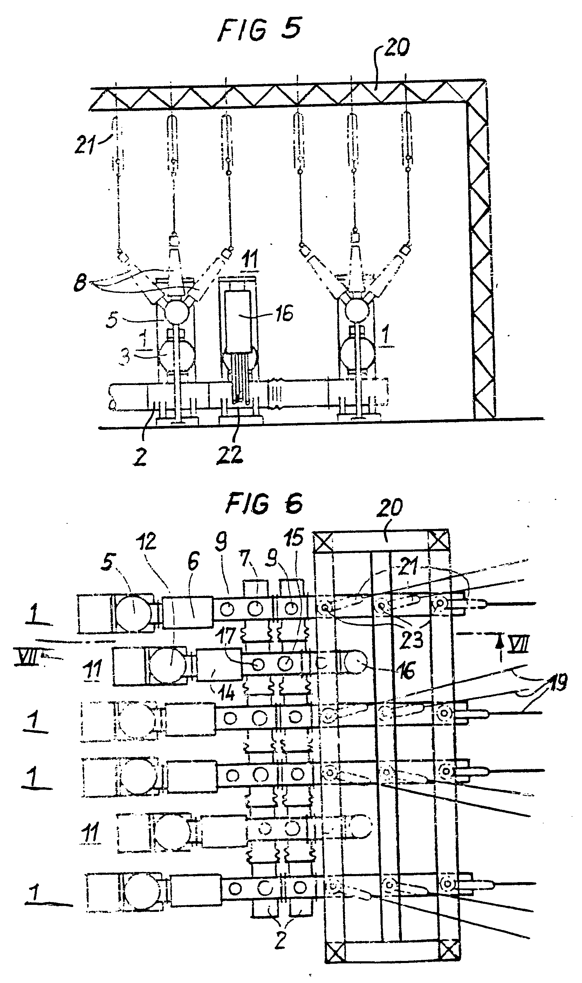

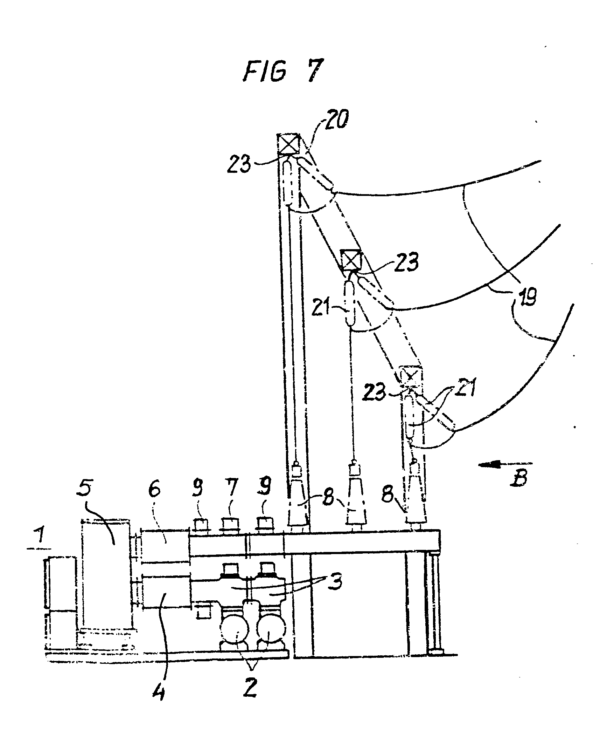

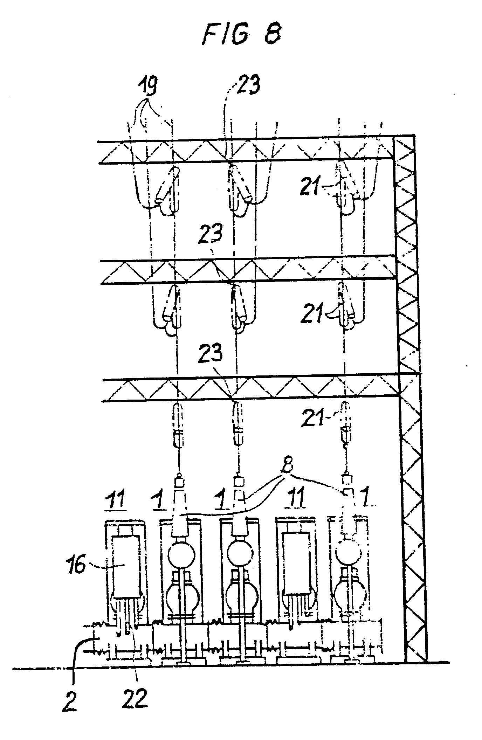

In den Fig. 6 bis 8 ist dagegen ein Beispiel für eine gemäss der Erfindung ausgebildete Schaltstation dargestellt. Auch hier sind die für die vier Schaltfelder 1 erforderlichen Freileitungsseile 19 von einem nicht dargestellten Tragmast kommend über Isolatoren 21 an der rahmenförmigen Tragkonstruktion 20 verankert. Hier liegen aber die Anschlusspunkte 23 der die drei Freileitungsseile 19 eines Schaltfeldes 1 an der Tragkonstruktion 20 verankernden Isolatoren 21 in einer im Bereich der Feldteilung des Schaltfeldes 1 auf der Mittelachse liegenden, vertikalen Ebene in Höhe und Tiefe gestaffelt angeordnet. Die Durchführungen 8 liegen also in Richtung der Mittelachse des Schaltfeldes 1 aufeinanderfolgend hintereinander. Dadurch können auch mehrere Schaltfelder 1 nebeneinanderliegend angeordnet werden, ohne dass im Zug der Doppelsammelschiene 2 Distanzstücke notwendig werden. Allerdings wird die Höhe der Tragkonstruktion 20 etwas grösser und die Verbindung zwischen den Durchführungen 8 ist verlängert. .Das Letztere kann vernachlässigt werden, weil nun die Montage der jetzt geraden und nicht mehr schräg angeordneten Durchführungen 8 vereinfacht ist. Ausserdem liegt der erhöhte Raumbedarf für die Tragkonstruktion 20 im Freien, wo die Höhe meist nicht eingeschränkt ist. Die durch die Erfindung erzielte grosse Raumeinsparung im Bereich der gekapselten Hochspannungsschaltanlage ist im übrigen völlig unabhängig von der Anzahl der verwendeten Freileitungsanschlüsse und sonstigen Schaltfelder in der Schaltstation.

**Patentansprüche**

Freileitungsanschluss an einer Schaltstation mit einer dreipolig gekapselten, druckgasisolierten Hochspannungsschaltanlage, bei welcher die Freileitungsseile (19) zunächst über Isolatoren (21) an einer Tragkonstruktion (20) verankert und dann zu den Durchführungen (8) an dem dreipolig gekapselten, druckgasisolierten Schaltfeld (1) geführt sind, dadurch gekennzeichnet, dass die Anschlusspunkte (23) der die Freileitungsseile (19) für ein Schaltfeld (1) an der Tragkonstruktion (20) verankernden Isolatoren (21) in einer im Bereich der Feldteilung des Schaltfeldes (1) vorzugsweise auf der Mittelachse liegenden, insbesondere vertikalen Ebene in der Tiefe und Höhe gestaffelt angeordnet sind und dass die Durchführungen (8) des Schaltfeldes in dieser Ebene hintereinander angeordnet sind.

**Claims**

Overhead-line connection at a switching station comprising a three-pole encapsulated pressure-gas insulated high-voltage switching unit, wherein the overhead cables (19) are coupled to a supporting structure (20) by insulators (21) and then to feed-through ducts (8) on the three-pole encapsulated pressure gas insulated switching field (1), characterised in that the connection points (23) of the insulators (21) which couple the overhead cables (19) for a switching field (1) to the supporting structure (20) are staggered in depth and height in a plane which in particular is vertical and preferably lies on the centre axis in the region of the field division of the switching field (1), and that the feed-through ducts (8) of the switching field are arranged in series in this plane.

**Revendications**

Branchement sur ligne aérienne pour une sous-station de sectionnement à installation de distribution blindée haute tension triphasée à isolation à gaz sous pression, dans lequel les câbles (19) pour lignes aériennes sont d'abord ancrés par l'intermédiaire d'isolateurs (21) à une charpente (20) et sont ensuite amenés aux traversées (8) prévues dans la cellule de coupure triphasée blindée et à isolation à gaz sous pression (1), caractérisé par le fait que les points de branchement (23) des isolateurs (21) qui ancrent à une charpente (20) les câbles (19) pour lignes aériennes pour une cellule de coupure (1), sont disposés avec échelonnement en profondeur et en hauteur, dans un plan, en particulier vertical, situé dans le voisinage de la subdivision de la cellule de coupure (1) de préférence dans l'axe médian, et les traversées (8) des cellules de coupure sont disposées les unes derrière les autres dans ce plan.

## FIG 1

FIG 2

FIG 3

FIG 4

## FIG 5

## FIG 6

FIG 7

FIG 8